# EUROPÄISCHE PATENTSCHRIFT

(11) **EP 1 724 484 B1**
(45) Veröffentlichungstag und Bekanntmachung des Hinweises auf die Patenterteilung: **11.11.2009**
(21) Anmeldenummer: 06007459.8
(22) Anmeldetag: 08.04.2006
(51) Int. Cl.: F16D 23/12

(54) **Vorrichtung zur Betätigung einer Kupplung**
Device for actuating a coupling
Dispositif pour l'actionnement d'un embrayage

(30) Priorität: 19.05.2005 US 682723 P
(43) Veröffentlichungstag der Anmeldung: 22.11.2006
(73) Patentinhaber: LuK Lamellen und Kupplungsbau Beteiligungs KG, 77815 Bühl (DE)
(72) Erfinder: Smith, David, Wadsworth Ohio 44281 (US); Habegger, Jim, Wooster Ohio 44691 (US)

(56) Entgegenhaltungen:
- DE-A1- 4 431 641
- DE-A1- 19 547 081
- DE-C1- 19 736 557

## Beschreibung

Die vorliegende Erfindung betrifft eine Vorrichtung zur Betätigung einer Kupplung, die gegen eine Federkraft betätigt wird, wobei die Vorrichtung eine drehbare Betriebsrampe, die mit einem Antriebsmittel verbunden ist, eine drehfeste Hilfsrampe und eine drehbare Ausgleichsrampe umfasst, wobei die Betriebsrampe mit der Hilfsrampe und die Hilfsrampe mit der Ausgleichsrampe jeweils über eine mit axialer Steigung versehenen Schraubenebene miteinander in Kontakt sind und bei Verdrehen der Betriebsrampe oder der Ausgleichsrampe eine axiale Vorschubbewegung eines Betätigungskopfes der Vorrichtung bewirken.

Eine selbstnachstellende Kupplung umfasst im Prinzip einen Hebel, der wie eine Wippe drehbar gelagert ist. Eine Seite der Wippe ist federbelastet, die andere Seite ist durch die Tellerfeder der Kupplung belastet. Eine Änderung des Drehpunktes verändert das Kräftegleichgewicht und damit die Hebelstellung. Die Änderung der Hebelstellung wird zum Verschleißausgleich genutzt.

Bei nicht selbst nachstellenden Kupplungen werden Betätigungsvorrichtungen mit Vorkehrungen zum Verschleißausgleich benutzt, da hier ein Ausgleich des Verschleißes der Kupplung durch die Betätigungsvorrichtung selbst erfolgen muss. Eine gattungsbildende Betätigungsvorrichtung ist beispielsweise aus der DE 195 47081 bekannt. Die Betätigungsvorrichtung umfasst zwei Rampen, von denen eine als Betriebsrampe der Kupplungsbetätigung, die andere dem Verschleißausgleich dient.

Bei der aus dem Stand der Technik bekannten Vorrichtung folgt eine Ausgleichsbewegung durch Federkraft, sobald die Axialkraft, d. h. die Kraft, mit der die Betätigungsvorrichtung auf das Ausrücklager drückt, in einer Ausgangslage (Nulllage) die Axialkraft der Tellerfeder der Kupplung unterschreitet. Die Ausgangslage ist die vollständig geschlossene Kupplung (bei aktiv zugedrückten Kupplungen die geöffnete Kupplung). Maßgeblich für den Ausgleichsvorgang ist also nicht der tatsächliche Verschleiß oder Fertigungstoleranz bei Erstinbetriebnahme in Form des zurückzulegenden Mehrweges bei Betätigung der Kupplung, sondern das Nachlassen der Rückstellkraft der Tellerfeder. Entsprechend stark ist die Feder auszulegen, die die Ausgleichsvorrichtung betätigt. Dies führt unter Anderem zu einer großen Baulänge der Ausrückvorrichtung.

Aufgabe der vorliegenden Erfindung ist es daher, eine Vorrichtung anzugeben, bei der ein Verschleißausgleich bei geringeren Federkräften der Ausgleichsvorrichtung möglich ist. Des Weiteren soll die axiale Baulänge verringert werden.

Dieses Problem wird gelöst durch eine Vorrichtung zur Betätigung einer Kupplung, die gegen eine Federkraft betätigt wird, wobei die Vorrichtung eine drehbare Betriebsrampe, die mit einem Antriebsmittel verbunden ist, eine drehfeste Hilfsrampe und eine drehbare Ausgleichsrampe umfasst, wobei die Betriebsrampe mit der Hilfsrampe und die Hilfsrampe mit der Ausgleichsrampe jeweils über eine mit axialer Steigung versehenen Schraubenebene miteinander in Kontakt sind und bei Verdrehen der Betriebsrampe oder der Ausgleichsrampe eine axiale Vorschubbewegung eines Betätigungskopfes der Vorrichtung bewirken, wobei die Ausgleichsrampe mit einem Übertragungselement zusammenwirkt, das mit einem Anschlag, der ein Spiel in axialer Richtung aufweist, versehen ist und der Anschlag gehäuseseitig mittels eines in axialer Richtung wirkenden Freilaufs gelagert ist.

Der Betätigungskopf ist üblicherweise mit einem Ausrücklager der Kupplung verbunden. Die Ausgleichsrampe ist gegenüber dem Übertragungselement drehbar. Der Anschlag wirkt in beide axiale Richtungen, es erfolgt also ein Anschlag eines Anschlagsmittels an ein Gegenmittel sowohl in Betätigungsrichtung der Kupplung als auch in der Gegenrichtung. Als Spiel wird hier die freie Bewegbarkeit zwischen beiden Anschlagsseiten verstanden. Die gehäuseseitige Lagerung des Anschlagsmittels eines in axialer Richtung wirkenden Freilaufs ermöglicht es, den Anschlag insgesamt in einer Richtung zu verschieben, in der anderen Richtung jedoch nicht. Eine derartige Vorrichtung ist in der Lage, im Betrieb durch Verschleiß auftretende Toleranzen sowie Fertigungstoleranzen auszugleichen. Wird bei der erstmaligen Kupplungsbetätigung das Spiel des Anschlages bereits überwunden, so stellt sich Vorrichtung durch die Ausgleichsrampe selbst nach und gleicht die Fertigungstoleranz bezüglich des Kupplungsweges aus.

In einer Weiterbildung der Erfindung ist vorgesehen, dass der Anschlag einen Schieber aufweist, der durch einen Mitnehmer nach Überwinden des Spiels in axialer Richtung verschoben wird. Vorzugsweise ist der Schieber ein Ring und das Übertragungselement ein Stützrohr, wobei der Ring zwischen einer umlaufenden Nut des Stützrohres und einem Gehäuse angeordnet ist. Dabei ist vorzugsweise vorgesehen, dass der Ring in axialer Richtung zu dem Betätigungskopf hin verschiebbar und in entgegengesetzter Richtung unverschieblich ist. Der Freilauf ist bevorzugt zwischen dem Ring und dem Gehäuse angeordnet.

Zwischen der Hilfsrampe und der Ausgleichsrampe ist vorzugsweise eine Feder angeordnet, diese kann, da die Hilfsrampe bezüglich der Drehung als gehäusefest angesehen werden kann, auch direkt mit dem Gehäuse verbunden sein. Die Feder dreht die Ausgleichsrampe vorzugsweise in eine Richtung, die eine Verlängerung der Vorrichtung in axialer Richtung bewirkt. Die Schraubenebenen der Betriebsrampe und der Ausgleichsrampe sind bevorzugt radial zueinander versetzt angeordnet, dadurch kann die axiale Länge der Hilfsrampe verringert werden.

Das Antriebsmittel für die Betriebsrampe ist bevorzugt ein Hebel, der von einem Aktor betätigt wird. Alternativ kann die Betriebsrampe auch über ein Zahnradgetriebe, einen Riemenantrieb oder dergleichen gedreht werden.

Im Folgenden wird ein Ausführungsbeispiel der Erfindung anhand der beiliegenden Zeichnungen erläutert. Dabei zeigen:
- Fig. 1a bis 1e: eine Prinzipskizze einer Kupplungsausrückvorrichtung;
- Fig. 2e bis 2e: eine räumliche Darstellung einer Kupplungsausrückvorrichtung im Teilschnitt.

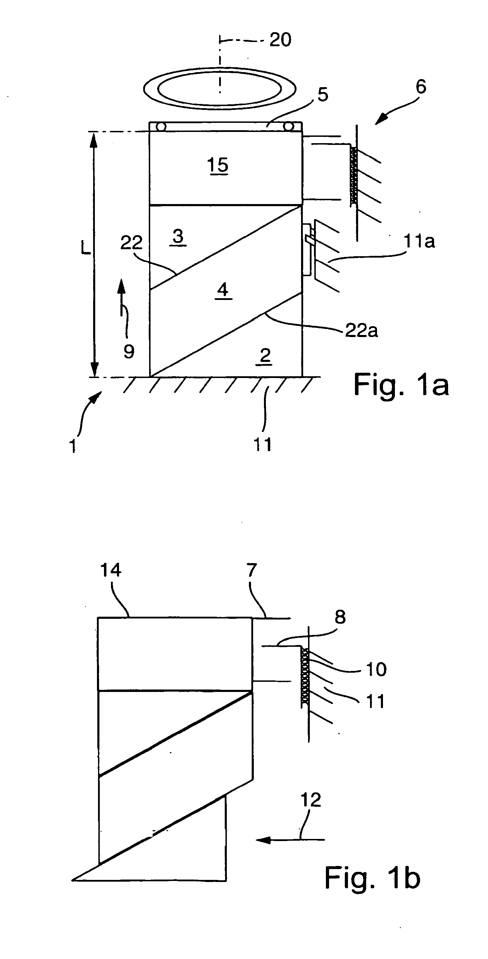

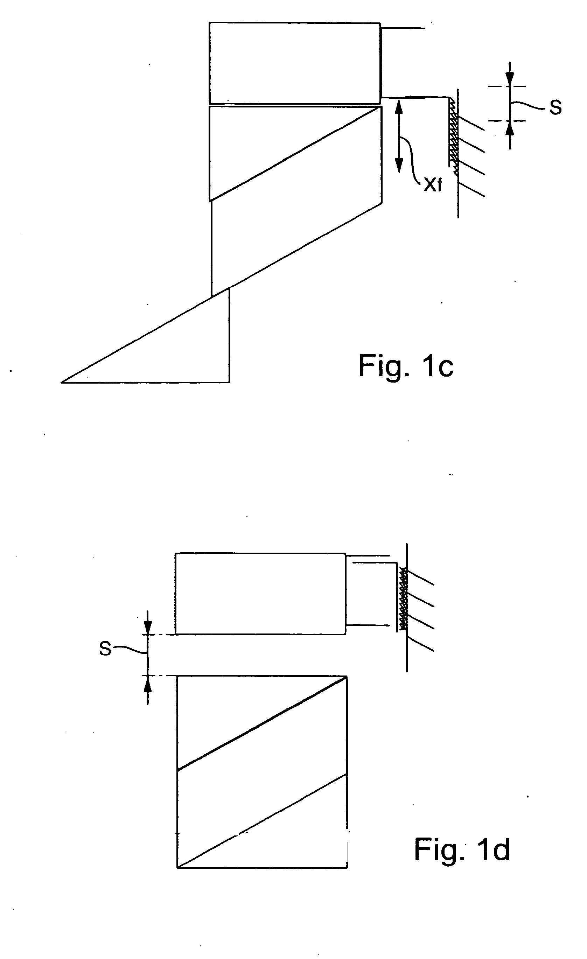

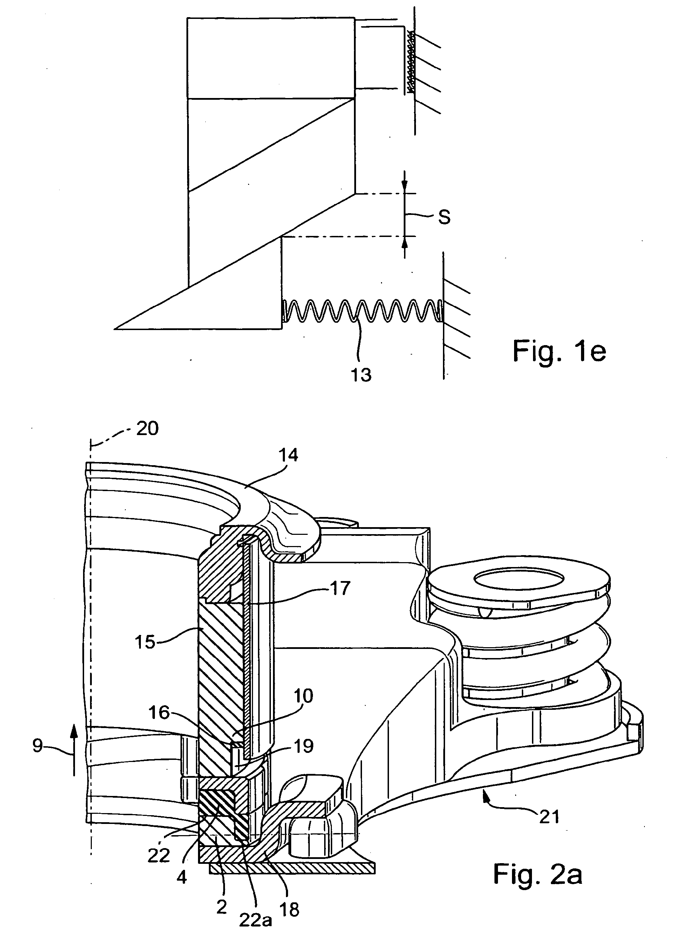

Figur 1a bis 1e zeigen eine Prinzipskizze der Funktionsweise einer erfindungsgemäßen Vorrichtung zur Betätigung einer Kupplung, hier anhand eines so genannten Zentralausrückers. Ein Zentralausrücker umfasst als Betätigungsmittel für eine Kupplung bzw. ein Ausrücklager in der Regel im Wesentlichen rotationssymmetrische oder aus Zylindern ausgeschnittene Baugruppen, dargestellt ist in Figur 1 ein Teil einer Abwicklung des Zentralausrückers, der das Grundprinzip erläutern soll. Bekannt sind Zentralausrücker mit ein oder zwei Rampenvorrichtungen, beispielsweise eine Vorrichtung mit zwei Rampenvorrichtungen, wie sie in der DE 195 47 081, auf die hier ausdrücklich Bezug genommen wird, dargestellt ist.

Eine Rampenvorrichtung 1 umfasst eine Betriebsrampe 2 und eine Ausgleichsrampe 3. Die Rampen sind in der Praxis im wesentlichen aus Zylindern ausgeschnittene Teile ähnlich einem Gewinde, die in Figur 1 dargestellten dreieckigen Bauteile sind tatsächlich also Ausschnitte aus hohlzylindrischen Rotationskörpern, wie dies durch eine Mittellinie bzw. Drehachse 20 und als Ellipsen angedeutete räumliche Darstellung der Draufsicht auf den Hohlzylinder angedeutet ist. Die Bezugszeichen wurden jeweils nur in einer der Figuren 1 a bis 1 e dargestellt, da die jeweiligen identischen Bauteile leicht zu identifizieren sind.

Die Ausgleichsrampe 3 ist über ein Übertragungselement 15 verbunden mit einem Ausrücklager 5. Die Betriebsrampe 2 ist in axialer Richtung gehäusefest, dies ist schematisch als Bezugszeichen 11 in Figur 1 dargestellt, aber drehbar um die Drehachse 20 gelagert. Die Ausgleichrampe 3 ist sowohl um die Symmetrieachse 20 drehbar als auch axial verschieblich in Richtung der Symmetrieachse 20 gelagert. Die Hilfsrampe 4 sowie das Übertragungselement 15 sind bezüglich einer Drehung um die Symmetrieachse 20 fest und in Richtung der Symmetrieachse 20 axial verschieblich gelagert, dies ist durch eine verschiebbares drehfestes Lager 11a in Fig. 1 angedeutet. Die Rampen 2, 3, 4 stützen sich jeweils mit einer mit axialer Steigung versehenen Schraubenebene 22 und 22a aufeinander ab. Beide Schraubenebenen können unterschiedliche Steigungen und unterschiedliche Durchmesser haben.

In Figur 1 ist weiter ein Betätigungskopf 14 des Zentralausrückers bzw. der Rampenvorrichtung 1 bezeichnet, dies ist der Bereich, mit dem der Zentralausrücker mit der Kupplung interagiert bzw. auf diese Kraft ausübt, im vorliegenden Fall ist das der ausrückerseitige Lagerring bzw. Lagerkäfig des Ausrücklagers 5, welches in bekannter Art und Weise, hier nicht dargestellt, beispielsweise mit einer Tellerfeder einer Kupplung zwischen Antriebsmotor und Getriebe in einem Antriebsstrang eines Kraftfahrzeuges zusammen wirkt.

Wird die Betriebsrampe 2 in Richtung des Pfeiles 12 gedreht, so wird die Länge L der Vorrichtung vergrößert. Das Gleiche gilt für eine Drehung der Ausgleichsrampe 3 entgegen der Pfeilrichtung 12.

Das Übertragungselement 15 ist mit einem Anschlag 6 verbunden. Dieser ist in der Darstellung der Figur 1 nur schematisch dargestellt und hat die Funktion eines Anschlags in beiden Bewegungsrichtungen mit einer Hysterese bzw. einem Spiel zwischen beiden Anschlägen. Der Anschlag 6 umfasst, wie übersichtlichkeitshalber nur anhand der Figur 1 b dargestellt ist, einen mit dem Übertragungselement 15 verbundenen Mitnehmer 7, der mit einem Schieber 8 in Eingriff ist. Wie anhand der Figuren 1a bis 1 c erkennbar ist, sind Mitnehmer 7 und Schieber 8 so gestaltet, dass diese um einen Weg xf, der durch einen Doppelpfeil in Figur 1 c gekennzeichnet ist, in axialer Richtung, diese ist durch den Bezugspfeil 9 in Figur 1 gekennzeichnet, gegeneinander verschoben werden können. Mitnehmer 7 und Schieber 8 lassen sich um den Weg xf gegeneinander verschieben, bei einer weiteren Verschiebung des Mitnehmers über den in Figur 1 c dargestellten Verschiebeweg 9 hinaus wird der Schieber 8 in axialer Richtung, also in Richtung des Pfeils 9, durch den Mitnehmer 7 mitgenommen.

Wird ausgehend von Figur 1 a die Stellung gemäß Figur 1 c angestrebt, wobei eine axiale Bewegung der Ausgleichsrampe 3, der Hilfsrampe 4 sowie des Übertragungselemente 15 in Pfeilrichtung 9 erfolgt, so wird der Mitnehmer 7 entsprechend mitgenommen, der Schieber verbleibt in seiner Stellung. In den Fig. 1 a und 1 c sind jeweils die Anschläge zwischen Mitnehmer 7 und Schieber 8 erreicht. Der Mitnehmer 7 hat also gegenüber dem Schieber 8 ein Spiel und dadurch eine Hysterese bezüglich dessen Mitnahme, diese entspricht dem in Figur 1 c bezeichneten Weg xf.

Der Schieber 8 ist über einen Freilauf 10 mit einem gehäusefesten Lager 11 verbunden. Der Freilauf 10 ermöglicht eine im Wesentlichen kraftfreie (oder unter geringer Kraftaufwendung mögliche) Verschiebung des Schiebers 8 in Richtung des Pfeils 9. Eine Verschiebung des Schiebers 8 gegenüber dem gehäusefesten Lager 11 entgegen der Pfeilrichtung 9 ist nicht möglich. Der Freilauf 10 kann in etwa wie in der Prinzipskizze der Figur 1a bis 1e angedeutet in Form einer Verzahnung, die z.B. durch rampenförmig gestaltete Zähne eine Verschiebung unter Verformung der Zähne in Richtung des Pfeils 9 zulässt und ein festes Verhaken der Zähne entgegen der Pfeilrichtung 9 bewirkt, oder in Form von Sperrklinken, in rampenförmigen Nuten gelagerten Kugeln oder Rollen oder dergleichen ausgeführt sein.

Anhand der Figuren 1a bis 1e wird die Funktionsweise des Prinzipienhaften dargestellten Zentralausrückers beschrieben. Figur 1a ist die Ausgangsstellung des Zentralausrückers, bei der also beispielsweise eine selbstschließende Kupplung vollständig geschlossen ist, dargestellt. Es wird hier beispielhaft von einer Kupplung ausgegangen, die gegen die Kraft einer Tellerfeder oder dergleichen geöffnet werden kann und durch die Kraft der Tellerfeder selbständig schließt. Der dargestellte Zentralausrücker aber auch bei aktiv zugedrückten selbstöffnenden Kupplungen anwendbar. Die Kupplung wird geöffnet, indem die Betriebsrampe 2, wie in Figur 1 b dargestellt, gegenüber der Hilfsrampe 4 in Richtung des Pfeils 12 verdreht - in der Abwicklung der Figur 1 verschoben - wird. Wird die Betriebsrampe 2 entgegen der Pfeilrichtung 12 zurückbewegt, so wird die Kupplung durch die Kraft der Tellerfeder geschlossen. Im Laufe der Betriebszeit der Kupplung wird der zurückzulegende Kupplungsweg größer, da sich die Kupplungsbeläge verschleißen und das Gesamtsystem mehr Spiel bekommt. Dies führt dazu, dass das Spiel xf des Anschlags 6 ab einem bestimmten Verschleiß überwunden wird und der Schieber 8 in Richtung des Pfeils 9 mitgenommen wird. Durch den Freilauf 10 ist die Verschiebung in Pfeilrichtung 9 möglich, eine Bewegung entgegengesetzt nicht. Der Schieber 8 bleibt daher in der axial in Richtung des Betätigungskopfes 14 verschobenen Stellung stehen. Wird die Betriebsrampe 2, wie in Figur 1 dargestellt, wieder in ihre Ausgangslage zurückgedreht, so verbliebe ein Spiel S zwischen Betriebsrampe 2 und Ausgleichsrampe 3. Das Spiel S wird ausgeglichen, indem die Ausgleichsrampe 3 nunmehr, wie in Figur 1e dargestellt, gegenüber der Hilfsrampe 4 gedreht wird. Die Drehung erfolgt durch eine Feder, beispielsweise eine Spiralfeder oder dergleichen, die zwischen der Ausgleichsrampe 3 und der Hilfsrampe 4 oder dem Gehäuse angeordnet ist, wie dies prinzipiell in Figur 1e dargestellt ist. Übersichtlichkeitshalber wurde die Feder 13 in den Figuren 1 a bis 1 d nicht dargestellt. Die Feder 13 sorgt dafür, dass die Ausgleichsrampe 3 gedreht wird, sobald eine Lücke S auftritt. Da das Übertragungselement 15 durch die Anschlag 6 und dessen Freilauf 10 festgehalten wird und die Kraft der Tellerfeder der Kupplung aufnimmt, entsteht das Spiel S praktisch kraftfrei, so dass die Ausgleichsrampe 3 mit einem minimalen Kraftaufwand gedreht werden kann. Die Feder 13 kann dementsprechend leistungsschwach ausgelegt werden.

Die Figuren 2a bis 2e zeigen ein Ausführungsbeispiel eines Zentralausrückers, der nach dem in Figur 1 dargestellten Prinzip arbeitet. Dargestellt ist ein Zentralausrücker in einer räumlichen Seitenansicht im Teilschnitt. Die Betriebsrampe 2, die Hilfsrampe 4 sowie die Ausgleichsrampe 3 sind jeweils Zylinderausschnitte und weisen im Wesentlichen eine Form ähnlich einem Gewinde auf. Die Betriebsrampe 2 und die Hilfsrampe sind radial versetzt angeordnet, sodass die zugehörigen Schraubenebenen 22a der Hilfsrampe ebenfalls radial versetzt angeordnet sind. Dadurch kann die axiale Baulänge der Hilfsrampe 4 und damit die des gesamten Ausrückers verringert werden. Die Betriebsrampe 2 ist mit einem Hebel 18 verbunden, der der Kupplungsbetätigung dient. Der Hebel 18 setzt eine translatorische Bewegung eines nicht näher dargestellten Aktors 21 in eine Drehbewegung der Betriebsrampe 2 um die Symmetrieachse 20 um. Das Betätigungsmittel 15 ist hier als Stützrohr ausgeführt. An der der Ausgleichsrampe 3 zugewandten Seite umfasst das Stützrohr 15 einen umlaufenden Absatz 19, der zusammen mit der dem Stützrohr 15 zugewandten Stirnfläche der Hilfsrampe eine Nut bildet. Das Stützrohr 15 und die Ausgleichsrampe 3 sind gegeneinander verdrehbar. In der durch den Absatz 19 gebildeten Ringnut ist ein Ring 16 angeordnet. Der Ring 16 ist gegenüber einem rohrartigen Gehäuse 17 in Pfeilrichtung 9 verschiebbar, in die Gegenrichtung nicht verschiebbar. Der Freilauf 10 befindet sich also zwischen dem Außenumfang des Ringes 16 und der Innenfläche des Gehäuses 17.

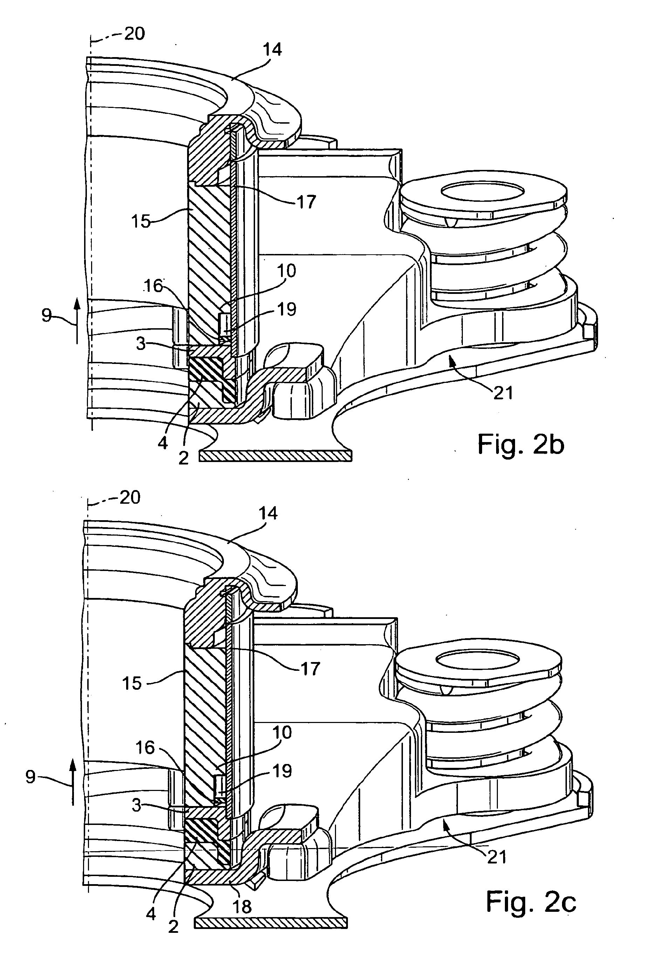

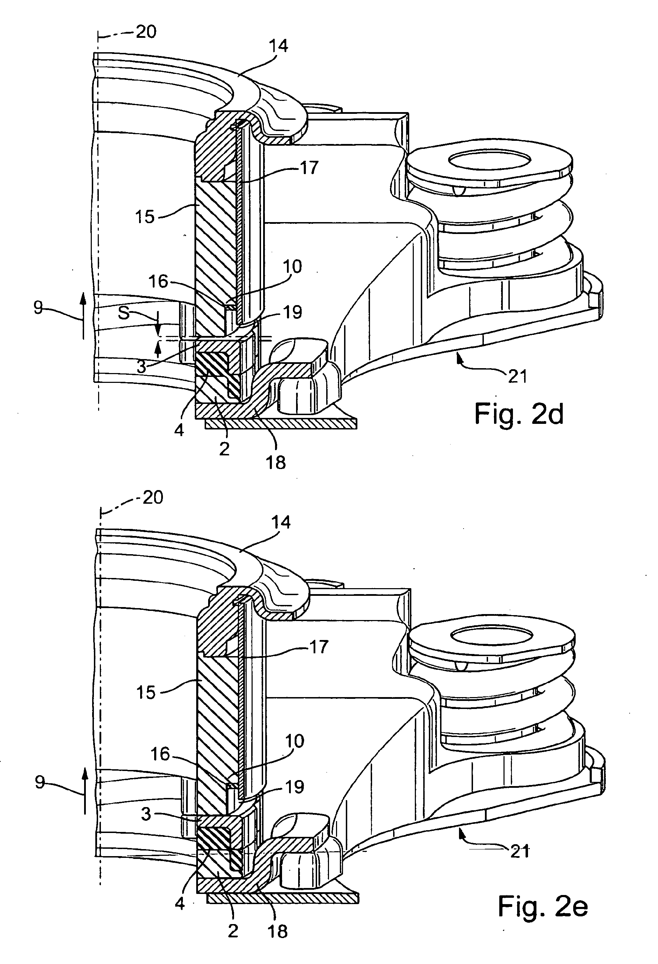

In Figur 2b ist eine Stellung dargestellt, bei der der Ring 16 an der Ausgleichrampe 3 zum Anliegen kommt, mithin also an der dem Betätigungskopf 14 abgewandten Seitenfläche der Ringnut 19. Bei einer weiteren Betätigung der Betriebsrampe 2, wie dies in Figur 2c dargestellt ist, wird der Ring 16 in Richtung des Pfeiles 9 axial verschoben. Wird die Betriebsrampe 2 in ihre Ausgangsstellung zurückgefahren, wie dies in Figur 2d dargestellt ist, so verhindert der Ring 16, dass das Stützrohr 15 ebenfalls in seine Ausgangslage, wie z.B. in Figur 2a dargestellt, zurückgleitet. Vielmehr verbleibt, wie in Figur 2d dargestellt, ein Spalt S zwischen dem Stützrohr 15 und der Ausgleichsrampe 3. Dieser wird durch Verdrehen der Hilfsrampe, wie in Figur 2e dargestellt, wieder geschlossen. Im Ergebnis ist das Stützrohr 15 in seiner Nuillage oder Ausgangslage nun weiter in Betätigungsrichtung verschoben, die Nulllage oder Ausgangslage der Betätigungsrampe bleibt identisch und die Lage der Ausgleichsrampe ist verdreht, so dass diese verlängert wird und den Ausgleich der Lage des Betätigungskopfes bei nicht ausgelenkter Betätigungsrampe 3 herbeiführt.

### Bezugszeichenliste

- 1: Rampenvorrichtung
- 2: Betriebsrampe
- 3: Ausgleichsrampe
- 4: Hilfsrampe
- 5: Ausrücklagers
- 6: Anschlag
- 7: Mitnehmer
- 8: Schieber
- 9: Verschiebung in axialer Richtung
- 10: Freilauf
- 11: Axial gehäusefeste drehbare Lagerung
- 11a: Axial verschiebliche und gegen Drehung gehäusefeste Lagerung
- 12: Pfeil
- 13: Feder
- 14: Betätigungskopf
- 15: Übertragungselement, Stützrohr
- 16: Ring
- 17: Gehäuse
- 18: Hebel
- 19: umlaufender Absatz
- 20: Symmetrieaxe
- 21: Aktor
- 22, 22a: Schraubenebene

## Patentansprüche

1. Vorrichtung zur Betätigung einer Kupplung, die gegen eine Federkraft betätigt wird, mit:
• einer drehbaren Betriebsrampe (2),
○ die mit einem Antriebsmittel verbunden ist,
• einer drehfesten Hilfsrampe (4) und
• einer drehbaren Ausgleichsrampe (3),
○ wobei die Betriebsrampe (2) mit der Hilfsrampe (4) und die Hilfsrampe (4) mit der Ausgleichsrampe (3) jeweils über eine mit axialer Steigung versehene Schraubenebene (22) miteinander in Kontakt ist und
○ bei Verdrehen der Betriebsrampe (2) oder der Ausgleichsrampe (3) eine axiale Vorschubbewegung eines Betätigungskopfes (14) der Vorrichtung bewirken,
• und wobei die Ausgleichsrampe (3) mit einem Übertragungselement (15) zusammenwirkt,
○ das mit einem Anschlag (6) versehen ist,
■ der ein Spiel (xf) in axialer Richtung aufweist, und
■ der an einem Gehäuse (17) mittels eines in axialer Richtung wirkenden Freilaufs (10) gelagert ist.

2. Vorrichtung nach Anspruch 1, **dadurch gekennzeichnet, dass** der Anschlag (6) einen Schieber (8) aufweist, der durch einen Mitnehmer (7) nach Überwinden des Spiels (xf) in axialer Richtung verschoben wird.

3. Vorrichtung nach einem der vorhergehenden Ansprüche, **dadurch gekennzeichnet, dass** der Schieber (8) ein Ring (16) und das Übertragungselement ein Stützrohr (15) ist und der Ring (16) zwischen einer umlaufenden Nut (19) des Stützrohres (15) und einem Gehäuse (17) angeordnet ist.

4. Vorrichtung nach einem der vorhergehenden Ansprüche, **dadurch gekennzeichnet, dass** der Ring in axialer Richtung zu dem Betätigungskopf (14) hin verschiebbar und in entgegengesetzter Richtung unverschieblich ist.

5. Vorrichtung nach einem der vorhergehenden Ansprüche, **dadurch gekennzeichnet, dass** der Freilauf (10) zwischen dem Ring (16) und dem Gehäuse (17) angeordnet ist.

6. Vorrichtung nach einem der vorhergehenden Ansprüche, **dadurch gekennzeichnet, dass** zwischen der Hilfsrampe (4) und der Ausgleichsrampe (3) eine Feder (13) angeordnet ist.

7. Vorrichtung nach einem der vorhergehenden Ansprüche, **dadurch gekennzeichnet, dass** die Feder (13) zwischen der Ausgleichsrampe (3) und dem Gehäuse (17) angeordnet ist.

8. Vorrichtung nach einem der vorhergehenden Ansprüche, **dadurch gekennzeichnet, dass** die Feder (13) die Ausgleichsrampe (3) in eine Richtung dreht, die eine Verlängerung der Vorrichtung in axialer Richtung bewirkt.

9. Vorrichtung nach einem der vorhergehenden Ansprüche, **dadurch gekennzeichnet, dass** die Schraubenebenen (22) der Betriebsrampe (2) und der Ausgleichsrampe (3) radial zueinander versetzt angeordnet sind.

10. Vorrichtung nach einem der vorhergehenden Ansprüche, **dadurch gekennzeichnet, dass** das Antriebsmittel ein Hebel (18) ist.

## Claims

1. Device for actuating a clutch which is actuated counter to a spring force, having:
• a rotatable operating ramp (2)
○ which is connected to a drive means,
• a rotationally fixed auxiliary ramp (4) and
• a rotatable compensating ramp (3),
○ with the operating ramp (2) being in contact with the auxiliary ramp (4), and the auxiliary ramp (4) being in contact with the compensating ramp (3), in each case via a screw plane (22) which is provided with an axial gradient and
○ generating an axial feed movement of an actuating head (14) of the device in the event of rotation of the operating ramp (2) or of the compensating ramp (3),
• and with the compensating ramp (3) interacting with a transmission element (15)
○ which is provided with a stop (6)
■ which has a degree of play (xf) in the axial direction and
■ which is mounted on a housing (17) by means of a freewheel (10) which acts in the axial direction.

2. Device according to Claim 1, **characterized in that** the stop (6) has a slide (8) which is moved in the axial direction by a driver (7) after the degree of play (xf) is overcome.

3. Device according to one of the preceding claims, **characterized in that** the slide (8) is a ring (16) and the transmission element is a support tube (15) and the ring (16) is arranged between an encircling groove (19) of the support tube (15) and a housing (17).

4. Device according to one of the preceding claims, **characterized in that** the ring is movable in the axial direction towards the actuating head (14) and is immovable in the opposite direction.

5. Device according to one of the preceding claims, **characterized in that** the freewheel (10) is arranged between the ring (16) and the housing (17).

6. Device according to one of the preceding claims, **characterized in that** a spring (13) is arranged between the auxiliary ramp (4) and the compensating ramp (3).

7. Device according to one of the preceding claims, **characterized in that** the spring (13) is arranged between the compensating ramp (3) and the housing (17).

8. Device according to one of the preceding claims, **characterized in that** the spring (13) rotates the compensating ramp (3) in a direction which generates an elongation of the device in the axial direction.

9. Device according to one of the preceding claims, **characterized in that** the screw planes (22) of the operating ramp (2) and of the compensating ramp (3) are arranged so as to be offset radially with respect to one another.

10. Device according to one of the preceding claims, **characterized in that** the drive means is a lever (18).

## Revendications

1. Dispositif pour l'actionnement d'un embrayage, qui est actionné à l'encontre de la force d'un ressort, comprenant :
- une rampe de fonctionnement rotative (2),
- qui est connectée à un moyen d'entraînement,
- une rampe auxiliaire (4) fixe en rotation, et
- une rampe de compensation rotative (3),
- la rampe de fonctionnement (2) étant en contact avec la rampe auxiliaire (4) et la rampe auxiliaire (4) étant en contact avec la rampe de compensation (3) à chaque fois par le biais d'un plan hélicoïdal (22) pourvu d'un pas axial, et
- provoquant, lors de la rotation de la rampe de fonctionnement (2) ou de la rampe de compensation (3), un déplacement d'avance axial d'une tête d'actionnement (14) du dispositif,
- et la rampe de compensation (3) coopérant avec un élément de transfert (15),
- qui est pourvu d'une butée (6),
- qui présente un jeu (xf) dans la direction axiale et
- qui est montée sur un boîtier (17) au moyen d'une roue libre (10) agissant dans la direction axiale.

2. Dispositif selon la revendication 1, **caractérisé en ce que** la butée (6) présente un coulisseau (8) qui est déplacé dans la direction axiale par un dispositif d'entraînement (7) après avoir surmonté le jeu (xf).

3. Dispositif selon l'une quelconque des revendications précédentes, **caractérisé en ce que** le coulisseau (8) est une bague (16) et l'élément de transfert un tube de support (15), et la bague (16) est disposée entre une rainure périphérique (19) du tube de support (15) et un boîtier (17).

4. Dispositif selon l'une quelconque des revendications précédentes, **caractérisé en ce que** la bague peut être déplacée dans la direction axiale vers la tête d'actionnement (14), et n'est pas déplaçable dans la direction opposée.

5. Dispositif selon l'une quelconque des revendications précédentes, **caractérisé en ce que** la roue libre (10) est disposée entre la bague (16) et le boîtier (17).

6. Dispositif selon l'une quelconque des revendications précédentes, **caractérisé en ce que** l'on dispose un ressort (13) entre la rampe auxiliaire (4) et la rampe de compensation (3).

7. Dispositif selon l'une quelconque des revendications précédentes, **caractérisé en ce que** le ressort (13) est disposé entre la rampe de compensation (3) et le boîtier (17).

8. Dispositif selon l'une quelconque des revendications précédentes, **caractérisé en ce que** le ressort (13) fait tourner la rampe de compensation (3) dans un sens, qui provoque une prolongation du dispositif dans la direction axiale.

9. Dispositif selon l'une quelconque des revendications précédentes, **caractérisé en ce que** les plans hélicoïdaux (22) de la rampe de fonctionnement (2) et de la rampe de compensation (3) sont disposés de manière décalée radialement les uns par rapport aux autres.

10. Dispositif selon l'une quelconque des revendications précédentes, **caractérisé en ce que** le moyen d'entraînement est un levier (18).
